# EUROPEAN PATENT SPECIFICATION

(11) **EP 3 418 098 B1**
(45) Date of publication and mention of the grant of the patent: **02.09.2026**
(21) Application number: 16893887.6
(22) Date of filing: 16.03.2016
(51) Int. Cl.: B60K 17/04, B60K 17/344, B60K 17/346

(54) **DRIVE AXLE ASSEMBLY AND ENGINEERING VEHICLE**
ANTRIEBSACHSENANORDNUNG UND BAUFAHRZEUG
ENSEMBLE PONT MOTEUR ET VÉHICULE INDUSTRIEL

(43) Date of publication of application: 26.12.2018
(73) Proprietor: Xuzhou Heavy Machinery Co., Ltd., Xuzhou City, Jiangsu 221004 (CN)
(72) Inventor: SHAN, Zenghai, Xuzhou City Jiangsu 221004 (CN); DING, Honggang, Xuzhou City Jiangsu 221004 (CN); MA, Fei, Xuzhou City Jiangsu 221004 (CN); LI, Li, Xuzhou City Jiangsu 221004 (CN); MA, Yunwang, Xuzhou City Jiangsu 221004 (CN); LIU, Guichang, Xuzhou City Jiangsu 221004 (CN)
(74) Representative: Prüfer & Partner mbB Patentanwälte · Rechtsanwälte
(86) International application number: PCT/CN2016/076452
(87) International publication number: WO 2017/156722

(56) References cited:
- EP-A2- 1 466 777
- EP-A2- 1 666 299
- CN-A- 103 738 136
- CN-A- 103 738 136
- CN-U- 203 948 609
- CN-Y- 2 435 276
- CN-Y- 2 887 650
- CN-Y- 2 887 650
- JP-A- H04 121 227
- KR-A- 20120 077 501
- US-A- 5 398 904
- US-A- 5 702 321
- US-A- 6 041 877
- US-A1- 2001 004 031

## Description

### FIELD OF THE INVENTION

The present disclosure relates to the technical field of construction vehicles. In particular, the present disclosure relates to a drive axle assembly and a construction vehicle.

### BACKGROUND OF THE INVENTION

An integral axle means that the axle is an integral structure, with the wheels at two ends being linked and not movable independent of each other, and a drive axle based on the integral axle has its main reducer housing rigidly connected with an axle housing to form an integral beam. A disconnected axle means that the middle of the axle is hinged, with the wheels at two ends being movable independent of each other, and a drive axle based on the disconnected axle has its main reducer fixedly connected to a frame. With the connection between the axle and the frame being typically taken as a boundary, the components that remain relatively stationary with respect to the frame when the frame is moving, belong to sprung mass, and the components that bounce with the wheels when the wheels is moving, belong to unsprung mass.

Currently, the disconnected axle is for use in family cars, while in the existing construction vehicles such as cranes and the like, the integral axle structure is employed, and a transfer case and a main reducer are connected via a transmission shaft. A construction vehicle with four axles or below requires compact structural arrangement. Upon laying out a driving scheme, a transmission is connected to the transfer case through a transmission shaft, and after reducing distance and distributing torque, the transfer case is connected to a front drive axle and a rear drive axle through the transmission shaft. Due to the limitation in space arrangement, the distance between the transfer case and adjacent axle ahead of it or adjacent axle behind it is too small to arrange a transmission shaft, resulting in that only non-drive axles can be used for the adjacent axles, which in turn results in a severe limitation for the design of driving schemes.

Take the existing three-axle all terrain crane as an example, in which the three axles from front to back are defined as a second axle, a first axle and a third axle respectively. In this case, the transfer case of the three-axle all terrain crane is disposed between the first axle and the second axle and is closer to the first axle. The transfer case is connected to the first axle and the second axle through the transmission shaft. As minimal distances between the transmission and the transfer case and between the transfer case and the first axle must be ensured to arrange the transmission shaft, arrangement space is greatly limited, such that the distance between an input end of the transfer case and an input flange end of the main reducer of the first axle is not enough for arrangement of the transfer case and related transmission shaft. At present, a solution to this problem is designing the first axle as non-drive axle, which means that the construction vehicle can only accomplish the second-axle and third-axle drive, and is unable to accomplish the first- axle and third-axle drive or full-axle drive. As a vehicle driven by the second-axle and third-axle has poor climbing ability, the performance of the whole vehicle may be restricted when the first axle is designed as non-drive axle. Further, EP 1 466 777 A2 discloses a torque transfer mechanism for controlling the magnitude of a clutch engagement force exerted on a multiple-plate clutch assembly that is operably disposed between a first rotary and a second rotary member. The torque transfer mechanism includes a clutch actuator for generating and applying a clutch engagement force on the clutch assembly. US 2001/0004031 A1 relates to a multi-wheel-driving vehicle including at least three parallel axles each of which is provided on both ends thereof with respective drive wheels and including power dividing means for permitting the rotary speed among the axles, is improved in its effect of braking so that the braking force of fewer brakes is effectively transmitted to all drive wheels of a vehicle according to a simple braking operation by a driver. The power dividing means, for example, a differential gear unit, includes an input member and a pair of output members, like differential side gears, each of which interlocks with at least one of the axles so as to differentially share a driving force received by the input member between the pair of output members. EP 1 666 299 A2 discloses a transfer case including a hydraulically actuated torque-coupling device and provided for selectively actuating a secondary drive axle of an All-Wheel Drive motor vehicle when wheel slippage occurs with a primary axle. The transfer case comprises a housing, an input shaft and an output shaft both rotatably supported within the housing, and the torque-coupling device. US 6,041,877 A relates to a drive unit for a hybrid vehicle including an internal combustion engine, a transmission connected to the internal combustion engine via a clutch, a primary differential gear for distributing a driving force transmitted from the transmission, to primary driving wheels, a transfer connected to the primary differential gear for taking out a part of the driving force transmitted from the transmission to the primary differential gear, a pair of propeller shafts formed by dividing two parts in axial directions for transmitting part of the driving force from the transfer to a secondary differential gear, an electric motor provided between these propeller shafts, and a pair of clutches, each connecting the electric motor to one of the pair of propeller shafts. CN 103 738 136 A discloses an independent suspension system which comprises two suspension oil cylinders arranged between the edges of wheels on two sides and a frame respectively, a steering mechanism used for driving the wheels on the two sides to make a turn under the drive action of a power-assisted steering oil cylinder, and two swing rods corresponding to the wheels on the two sides, wherein one end part of each swing rod is hinged to the edge of the wheel on the corresponding side through a spherical hinge, and the other end part of the swing rod is hinged to fixing members fixed below a main speed reducer in a front-rear direction through two spherical hinges respectively. CN 2 887 650 Y relates to a go-anywhere vehicle transfer case and a driving axle integration, which is characterized in that the transfer case capsid is connected with the driving axle capsid into a whole, wherein both sides of the device are fixed on two carlings of the car frame, and the output shaft of the transfer is connected with the final drive of the driving axle directly.

### SUMMARY OF THE INVENTION

An object of the present disclosure is to provide a drive axle assembly and a construction vehicle, which not only can save the arrangement space and accomplish more driving schemes, but also has smaller unsprung mass to impart less impact on the frame.

This object has been achieved by a construction vehicle as defined in claim 1. Preferred embodiments are disclosed in dependent claims.

The present disclosure integrates the transfer case and the main reducer as an integral structure based on the disconnected axle, which not only can omit the transmission shaft between the transfer case and the main reducer as used in the prior art, save the layout space, reduce the weight of the drive axle assembly and facilitate the implementation of more driving schemes, but also enables the transfer case, integrated with the main reducer as an integral structure, to bounce independently of the wheels since the main reducer is fixedly connected with the frame. That is, the main reducer and the transfer case both belong to sprung mass, so that the drive axle assembly has a smaller unsprung mass, capable of reducing the impact on the whole vehicle and improving the manipulating stability of the whole vehicle.

Other features of the present disclosure and advantages thereof will become explicit by means of the following detailed descriptions of exemplary embodiments of the present disclosure with reference to the drawings.

### BRIEF DESCRIPTION OF THE ACCOMPANYING DRAWINGS

In order to more clearly explain the embodiments of the present disclosure or the technical solutions in the prior art, a brief introduction will be given below for the drawings required to be used in the description of the embodiments or the prior art. It is obvious that, the drawings illustrated as follows are merely some of the embodiments of the present disclosure. For a person skilled in the art, he or she may also acquire other drawings according to such drawings on the premise that no inventive effort is involved.
Fig. 1 shows a front view of a drive axle assembly according to an embodiment of the present disclosure.
Fig. 2 shows a left side view of the integral structure of the main reducer and the transfer case of the drive axle assembly as shown in Fig. 1.
Fig. 3 shows a right side view of the integral structure of the main reducer and the transfer case of the drive axle assembly as shown in Fig. 1.
Fig. 4 shows a schematic assembly view of the drive axle assembly according to another embodiment of the present disclosure and a frame.
Fig. 5 shows an arrangement view of a drive axle for a construction vehicle according to an embodiment of the present disclosure.

In the figures:
1. drive axle assembly; 2. front axle assembly; 3. rear axle assembly; 4. engine; 5. transmission; 6. frame; 11. main reducer; 12. transfer case; 15. suspension cylinder; 16. swing rod; 17. wheel-side assembly; 18. accumulator; 111. leftward output flange; 112. rightward output flange; 113. rearward output flange; 121. input flange; 122. first power take-off port; 123. second take-off port; 124. forward output flange; 125. auxiliary support; 131. left half axle; 132. right half axle; 141. left wheel; 142. right wheel.

### DETAILED DESCRIPTION OF THE PREFERRED EMBODIMENTS

Next, the technical solution in the embodiments of the present disclosure will be explicitly and completely described in combination with the drawings in the embodiments of the present disclosure. Apparently, the described embodiments are merely part of the embodiments of the present disclosure, rather than all the embodiments. The following descriptions of at least one exemplary embodiment which are in fact merely descriptive, by no means serve as any delimitation on the present disclosure as well as its application or use. On the basis of the embodiments of the present disclosure, all the other embodiments acquired by a person skilled in the art on the premise that no inventive effort is involved fall into the protection scope of the present disclosure.

The techniques, methods, and apparatuses known to a common technical person in the relevant art may not be discussed in detail, but where appropriate, said techniques, methods, and apparatuses should be considered as part of the granted description.

In the description of the present disclosure, it is necessary to understand that, such wordings as "first" and "second" which are used to define the parts, are only intended to facilitate distinguishing the corresponding parts. Unless otherwise specified, the aforementioned wordings do not have particular meanings, and thus cannot be understood as limiting the protection scope of the present disclosure.

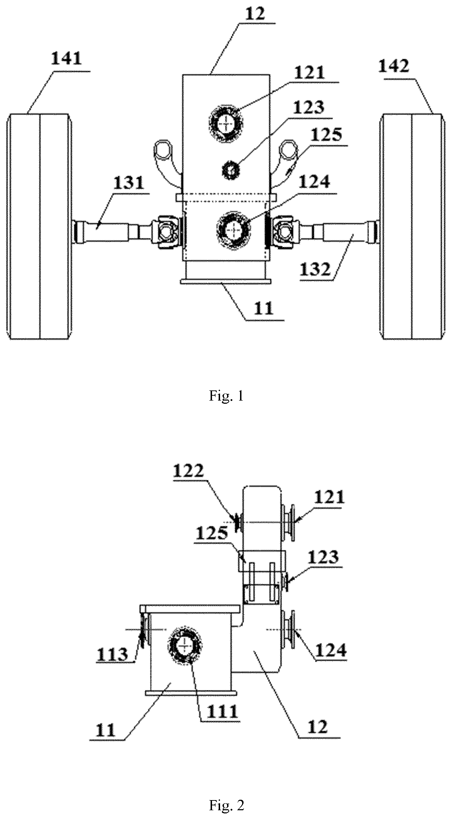

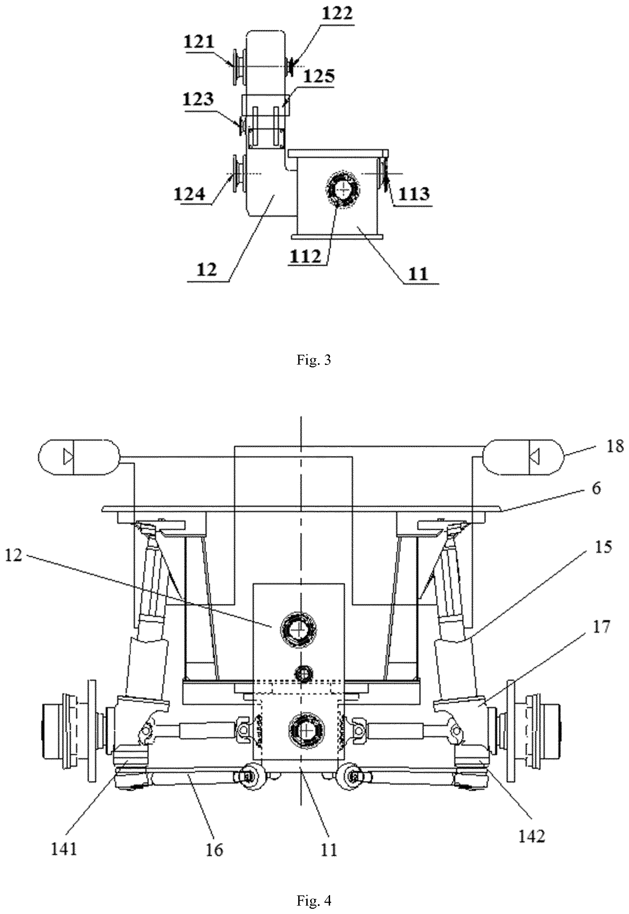

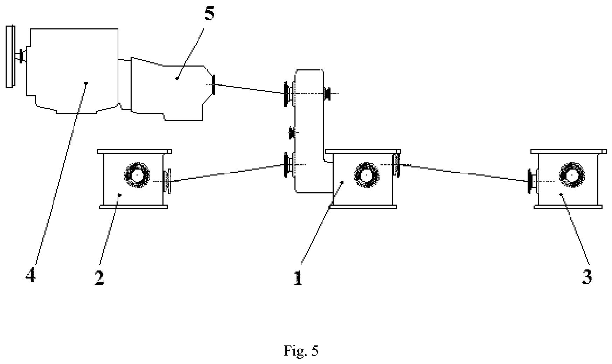

Figs. 1-3 show a schematic structural view of a drive axle assembly according to an embodiment of the present disclosure, Fig. 4 shows a schematic assembly view of the drive axle assembly according to another embodiment of the present disclosure and a frame, and Fig. 5 shows a schematic structural view of a construction vehicle according to an embodiment of the disclosure. Referring to Figs.1-4, a drive axle assembly 1 for a construction vehicle provided by the present disclosure comprises a left wheel 141, a right wheel 142, a disconnected axle, a main reducer 11, and a transfer case 12, wherein the main reducer 11 is drivingly connected with the left wheel 141 and the right wheel 142 through the disconnected axle, the main reducer 11 is drivingly connected with the transfer case 12, and a housing of the main reducer 11 is connected with a housing of the transfer case 12, and the main reducer 11 is fixedly connected with a frame 6 of the construction vehicle.

In the drive axle assembly 1 provided by the present disclosure, which is based on the disconnected axle, the transmission shaft between the transfer case and the main reducer as used in the prior art is omitted, and the transfer case 12 and the main reducer 11 are integrated into an integral structure, which can save the arrangement space, reduce the weight of the drive axle assembly 1 and facilitate the implementation of more driving schemes. Further, in the disconnected drive axle, the main reducer 11 is fixedly connected with the frame 6, so that the transfer case 12 integrated with the main reducer 11 can bounce independently of the wheels. That is, the main reducer 11 and the transfer case 12 both belong to sprung mass, so that the drive axle assembly 1 has smaller unsprung mass, capable of reducing the impact on the whole vehicle brought by bouncing motion of the wheels and the axles during driving and improving the manipulating stability of the whole vehicle.

The drive axle assembly 1 of the present disclosure will be further described with reference to Figs. 1-3. For ease of description, the following localizers such as "front, rear, left, right, up, down" and the like are all defined based on the position shown in Fig. 1 .

As shown in Figs. 1-3, the drive axle assembly 1 comprises the transfer case 12, the main reducer 11, the disconnected axle, the left wheel 141, and the right wheel 142, wherein the a housing of main reducer 11 is connected with a housing of the transfer case 12 such that the main reducer 11 and the transfer case 12 are integrated as an integral structure, and the main reducer 11 is drivingly connected with the left wheel 141 and the right wheel 142 through the disconnected axle.

As shown in Fig. 1, the disconnected axle comprises a left half axle 131 and a right half axle 132, and the main reducer 11 is provided with a leftward output flange 111 on its left end surface and a rightward output flange 112 on its right end surface, wherein the leftward output flange 111 is connected with an end of the left half axle 131, and the other end of the left half axle 131 is connected with the left wheel 141; the rightward output flange 112 is connected with an end of the right half axle 132, and the other end of the right half axle 132 is connected with the right wheel 142. In this way, the power transmitted to the main reducer 11 can be transmitted to the left wheel 141 via the leftward output flange 111 and the left half axle 131 and to the right wheel 142 via the rightward output flange 112 and the right half axle 132 at the same time, thereby achieving the power transmission to the left wheel 141 and the right wheel 142 of the drive axle assembly 1.

As can be seen, in this embodiment, the transfer case 12 and the main reducer 11 are integrated as an integral structure, with no need to provide a transmission shaft therebetween to achieve power transmission. Thus, this can save the occupation of the drive axle assembly 1 in space for arrangement of the whole construction vehicle, and facilitate the construction vehicle with said drive axle assembly 1 to accomplish more driving schemes.

Further, in this embodiment, the transfer case 12 and the main reducer 11 are integrated as an integral structure based on the disconnected axle. Unlike the integral axle in which the main reducer and the axle are an integral structure, the main reducer of the drive axle with said disconnected axle is fixedly connected with the frame 6, i.e. the main reducer of the disconnected axle belongs to sprung mass. Thus, in this embodiment, the main reducer 11 is fixedly connected with the frame 6, and the main reducer 11 bounces synchronously with the frame 6 independently of the wheels, such that the transfer case 12, integrated with the main reducer 11 as an integral structure, no longer bounces with the wheels, that is, the transfer case 12 in this embodiment also belongs to the sprung mass. Therefore, compared with the drive axle structure of the prior art in which the transfer case acts as an unsprung mass, the unsprung mass of the drive axle assembly 1 in this embodiment is reduced, the impact on the frame 6 is reduced, and the operational stability and the ride performance of the construction vehicle are effectively improved.

In the drive axle assembly 1 of this embodiment, the main reducer 11 is fixed with the frame 6, the transfer case 12 is fixed with the main reducer 11, and the transfer case 12 generally has a great mass. If no connection structure is provided between the frame 6 and an end of the transfer case 12 away from the main reducer 11, the transfer case 12 may assume a cantilever structure as a whole. Accordingly, upon vibration of the frame 6, the transfer case 12 may form a bending moment on the main reducer 11, which tends to result in a poor stressed state at the connection between the transfer case 12 and the main reducer 11. Therefore, in order to solve this technical problem, as shown in Fig. 1, the drive axle assembly 1 of this embodiment further comprises an auxiliary support 125 provided on the transfer case 12 for connection with the frame 6 of the construction vehicle. The arrangement of the auxiliary support 125 enables the transfer case 12 to be supported at both ends, that is, the transfer case 12 is changed from a cantilever structure to a simply-supported structure. Accordingly, the transfer case 12 can be prevented from applying a relatively large bending moment to the main reducer 1 upon vibration of the frame 6, thereby effectively improving the stressed characteristics of the connection between the main reducer 11 and the transfer case 12 as an integral structure, reducing the impact on the connection between the transfer case 12 and the main reducer 11 during driving of the vehicle, effectively lowering the risk of damage to the integral structure of the transfer case 12 and the main reducer 11, and prolonging the service life and reducing the maintenance costs thereof. In addition, since the transfer case 12 and the frame 6 are connected more firmly and stably, the transfer case 12 may be installed with a large-mass attachment such as a steering emergency pump and a retarder, to enrich the function of the transfer case 12.

As shown in Fig. 2 and Fig. 3, in this embodiment, the rear end surface of the transfer case 12 is connected with the front end surface of the main reducer 11 to form an integral structure; the front end surface of the transfer case 12 is sequentially provided, from top to bottom, an input flange 121 and a forward output flange 124, wherein the input flange 121 is drivingly connected with the engine 4 of the construction vehicle via a transmission shaft, the forward output flange 124 is drivingly connected with the front axle assembly 2 via a transmission shaft, and the transfer case 12 is configured to transmit power to the forward output flange 124 through a forward output shaft; and the rear end surface of the main reducer 11 is provided with a rearward output flange 113, which is drivingly connected with the transfer case 12 and the rear axle assembly 3 via a transmission shaft. On this basis, at the forward output flange 124 may be provided an eddy current retarder which has a fixed portion and a rotation portion rotatably provided with respect to the fixed portion, wherein either of the fixed portion and the rotation portion is arranged on the forward output shaft of the transfer case 12, and the other one is arranged on the forward output flange 124 for auxiliary braking.

In order to achieve the distance reducing function of the transfer case 12, the input flange of the transfer case 12 is arranged above the output flange. As shown in Figs. 1-3, in this embodiment, the input flange 121 is disposed above the forward output flange 124 and the rearward output flange 113 so as to achieve the distance reducing function of the transfer case 12.

Further, the transfer case 12 may also be provided with at least one power take-off port for connection with an auxiliary power device such as an air compressor, an oil pump and a steering emergency pump so as to provide auxiliary power for driving of the whole vehicle. As shown in Figs. 2-3, in this embodiment, the front and rear end surfaces of the transfer case 12 are provided with a second power take-off port 123 and a first power take-off port 122 respectively, wherein the first power take-off port 122 is equipped with an oil pump capable of providing hydraulic power for the auxiliary equipment of the whole vehicle, and the second take-off port 123 is equipped with a steering emergency pump capable of providing auxiliary steering power when the steering pump of the construction vehicle fails. Of course, it is also possible to arrange the steering emergency pump at the first power take-off port 122 and the oil pump at the second power take-off port 123.

In this embodiment, the integration of the large-mass attachment such as the eddy current retarder, the oil pump and the steering emergency pump onto the transfer case 12 not only can enrich the function of the transfer case 12 to diversify the functions of the drive axle assembly 1, but also can further save arrangement space of the whole vehicle to make the whole vehicle structure more compact and facilitate further optimization of the driving schemes of the whole vehicle.

In this embodiment, the integral structure of the transfer case 12 and the main reducer 11 can achieve the following functions: 1) having high and low gears and a switch device therefor; 2) outputting torque to the front and rear axles, and distributing the torque according to power arrangement; 3) reducing a distance needed by outputting power generated by the engine; 4) allowing installation of the steering emergency pump, the retarder and the like; 5) achieving function of main reducer; 6) achieving wheel-side differential/inter-axle differential and locking the differentials; 7) achieving function of thru-drive/non-thru-drive. It can be seen that the integral structure of the transfer case 12 and the main reducer 11 of this embodiment can achieve the functions of a separate transfer case (functions 1)-4) as stated above) and the functions of a separate main reducer (functions 5)-7) as stated above).

As shown in Fig. 4, as a further modification of the above embodiment, the drive axle assembly 1 of the present disclosure may further comprise two suspension cylinders 15 and two swing rods 16, wherein the two suspension cylinders 15 are arranged between wheel-side assembly 17 of the left wheel 141 and the frame 6 and between a wheel-side assembly 17 of the right wheel 142 and the frame 6 respectively, and the two swing rods 16 are in corresponding arrangement with the left wheel 141 and right wheels 142 respectively. An end of one side of each of the swing rods 16 is hinged with the wheel at corresponding side via a ball hinge, and ends of the other side of each of the swing rod 16 hinged with the first main reducer 11 via two ball hinges arranged in a front-and-rear direction. In the driving state, the two swing rods 16 can play the dual role of positioning the tires and receiving the reaction force from the road surface, which can ensure that the wheel distance is kept consistent when the wheels bounce up and down, and can improve the stressed state. Specifically, each of the two swing rods 16 may be a V-shaped swing rod, of which the connected end is hinged to the wheel at the corresponding side, and the separated ends are hinged to a lower surface of the main reducer 11. Herein, the connected end refers to the connection where two rod bodies forming the V-shape are combined, and the separated ends refer to the ends where the two rod bodies forming the V-shape are not combined, i.e. ends of open side.

In the present disclosure, with the arrangement of the integral structure of the transfer case 12 and the main reducer 11 based on the disconnected axle as well as a separate suspension comprising two suspension cylinders 15 and two swing rods 16, the construction vehicle is no longer limited to the use of an integral axle structure, making the structure thereof more compact and the drive arrangement more flexible.

Further, as shown in Fig. 4, in this further embodiment, the drive axle assembly 1 further comprises two accumulators 18. An oil port of one of the accumulators 18 is communicated with a rodless chamber of the left-side suspension cylinder 15 (i.e. the suspension cylinder 15 arranged between the wheel-side assembly 17 of the left wheel 141 and the frame 6) and a rod chamber of the right-side suspension cylinder 15 (i.e. the suspension cylinder 15 arranged between the wheel-side assembly 17 of the right wheel 142 and the frame 6). An oil port of the other accumulator 18 is communicated with a rod chamber of the left-side suspension cylinder 15 and a rodless chamber of the right-side suspension cylinder 15. In this way, when the wheel at one side is impacted, the rodless chamber of the suspension cylinder 15 at the impact side is compressed, the hydraulic oil enters the accumulator 18 at the impact side so the pressure of the hydraulic oil therein is increased, and meanwhile hydraulic oil is replenished to the rod chamber of the suspension cylinder 15 at the non-impact side, resulting in that the rodless chamber of the suspension cylinder 15 at the non-impact side is compressed and the hydraulic oil enters the accumulator 18 at the non-impact side, and the pressure of the hydraulic oil in the accumulator 18 at the non-impact side increases accordingly. In order to maintain a balance, the accumulator 18 at the non-impact side may replenish hydraulic oil to the rod chamber of the suspension cylinder 15 at the impact side, so that the suspension cylinders 15 at both sides can be associated, and thus the vibration of the wheels caused by impact can be quickly weakened. It can be seen that the control mode of the suspension cylinder 15 is optimized by such arrangement, and based on such control mode, a better vibration attenuation effect can be obtained only with a suspension cylinder 15 of simple structure. Further, since the hydraulic oil at the impact side enters the rod chamber of the suspension cylinder 15 at the non-impact side, the roll stiffness of the whole vehicle can be improved, the roll angle of the whole vehicle is reduced, and the ride comfort of the whole vehicle is improved.

Referring to Fig. 5, a construction vehicle is further provided in a second aspect of the present disclosure, which comprises a frame 6 and a drive axle assembly 1 of the present disclosure.

The construction vehicle of the present disclosure will be further described with reference to the embodiment shown in Fig. 5.

As shown in Fig. 5, in this embodiment, the construction vehicle is a three-axle construction vehicle, which comprises a frame 6 (not shown in the figure), a front axle assembly 2, a rear axle assembly 3, an engine 4, a transmission 5 and a drive axle assembly 1 in the above embodiment, wherein the drive axle assembly 1 is disposed between the front axle assembly 2 and the rear axle assembly 3, and the power of the engine 4 is transmitted to the front axle assembly 2 and the rear axle assembly 3 via the transmission 5 and the drive axle assembly 1.

The transmission 5 is drivingly connected with the engine 4, the drive axle assembly 1 is drivingly connected with the transmission 5 through the input flange 121 on the transfer case 12 integrated with the main reducer 11, the drive axle assembly 1 is drivingly connected with the front axle assembly 2 through the forward output flange 124 on the transfer case 12, the drive axle assembly 1 is drivingly connected with the rear axle assembly 3 through the rearward output flange 113 on the main reducer 11, and the main reducer 11 of the drive axle assembly 1 is drivingly connected with the left wheel 141 and the right wheel 142 though the leftward output flange 111 and the rightward output flange 112 thereon and the disconnected axle. In this way, the power of the engine 4 can be transmitted to the transfer case 12 via the transmission 5 and transmitted to the drive axle assembly 1 (middle axle assembly, corresponding to the first axle in the background art), the front axle assembly 2 (corresponding to the second axle in the background art) and the rear axle assembly 3 (corresponding to the third axle in the background art) through the transfer case 12 and the first main reducer 11 as an integral structure.

As described above, since the transfer case 12 and the main reducer 11 are integrated as an integral structure, the arrangement space occupied by the drive axle assembly 1 of the present disclosure is reduced, and said drive axle assembly 1 can also be designed as drive axle under the limited length of the whole vehicle. Therefore, the construction vehicle in this embodiment can not only accomplish the front-rear axle (corresponding to the second-third axle in the background art) driving scheme, but also accomplish the front-middle axle (corresponding to the first-second axle in the background art) driving scheme and full three-axle driving scheme. Compared with the existing construction vehicles in which the first axle can only be designed as non-drive axle due to space limitation, the construction vehicle in this embodiment can accomplish more driving schemes and can satisfy higher requirement of the construction vehicle for climbing performance. Further, as the main reducer 11 and the transfer case 12 of the drive axle assembly 1 both turn into sprung mass, the operational stability and ride comfort of the construction vehicle in this embodiment is also improved.

The construction vehicle of the present disclosure is described with a three-axle construction vehicle as an example in the embodiment shown in Fig. 5. Actually, the present disclosure is not limited to the three-axle construction vehicle, but is also applicable to other construction vehicles which have limited layout space but requires a variety of layout solutions. As the construction vehicles with four axles or below have smaller whole-vehicle length, the limitation on the design of driving schemes by the layout space is more obvious, so that this disclosure is especially suitable for compact multi-axle construction vehicles with four axles or below.

The foregoing is intended only as an exemplary of the present invention, but is not used for limiting the present invention. Any amendment, equivalent replacement, improvement, and the like is possible within the scope of the appended claims.

## Claims

1. A construction vehicle comprising a transmission (5), a frame (6) and a drive axle assembly (1), wherein the drive axle assembly (1) comprises:
a left wheel (141) ;
a right wheel (142) ;
a disconnected axle comprising a left half axle (131) and a right half axle (132);
a transfer case (12); and
a main reducer (11), being drivingly connected with the left wheel (141) and the right wheel (142) through the disconnected axle, being drivingly connected with the transfer case (12), **characterized**
**in that** the main reducer (11) is provided with a leftward output flange (111) and a rightward output flange (112), wherein the leftward output flange (111) is connected with a first end of the left half axle (131), a second end of the left half axle (131) being connected to with the left wheel (141), and wherein the rightward output flange (112) is connected with a first end of the right half axle (132), a second end of the right half axle (132) being connected to with the right wheel (142), and
**in that** the main reducer (11) has a first housing and the transfer case (12) has a second housing, wherein the first housing is connected with the second housing, and wherein the first housing is fixedly connected with the frame (6) of the construction vehicle, and the transfer case (12) is provided with an auxiliary support (125) for connection with the frame (6),
**in that** the construction vehicle is a construction vehicle with three or four axles, and the drive axle assembly (1) is disposed between the front axle assembly (2) and the rear axle assembly (3) of the construction vehicle, and
**in that** a front end surface of the transfer case (12) is provided with an input flange (121) connecting with the transmission (5) and a forward output flange (124) being drivingly connected with the front axle assembly (2) of the construction vehicle, and a rear end surface of the main reducer (11) is provided with a rearward output flange (113) being drivingly connected with the rear axle assembly (3) of the construction vehicle.

2. The construction vehicle according to claim 1, wherein the transfer case (12) is configured to transmit power to the forward output flange (124) through a forward output shaft; an eddy current retarder is provided on the forward output flange (124) and has a fixed portion and a rotation portion rotatably provided with respect to the fixed portion; either of the fixed portion and the rotation portion is arranged on the forward output shaft of the transfer case (12), and the other one is arranged on the forward output flange (124).

3. The construction vehicle according to claim 1, wherein the transfer case (12) is provided with at least one power take-off port for connection with an auxiliary power device.

4. The construction vehicle according to claim 3, wherein the auxiliary power device comprises an oil pump and a steering emergency pump, the at least one power take-off port comprises a first power take-off port (122) for connection with the oil pump and a second power take-off port (123) for connection with the steering emergency pump.

5. The construction vehicle according to claim 1, wherein the input flange (121) is located above the forward output flange (124) and the rearward output flange (113) in a direction extending upwardly perpendicular to the longitudinal axis of the disconnected axle.

6. The construction vehicle according to any one of claims 1 to 5, further comprising two suspension cylinders (15) and two swing rods (16), wherein the two suspension cylinders (15) are arranged between a wheel-side assembly (17) of the left wheel (141) and the frame (6) and between a wheel-side assembly (17) of the right wheel (142) and the frame (6) respectively, the two swing rods (16) are arranged correspondingly with the left wheel (141) and right wheel (142) respectively, and an end of one side of each of the swing rods (16) is hinged with the wheel at the corresponding side via a ball hinge, and ends of the other side of each of the swing rods (16) are hinged with the main reducer (11) via two ball hinges arranged in a front-and-rear direction.

7. The construction vehicle according to claim 6, wherein the swing rod (16) is a V-shaped swing rod, of which the separated ends are hinged to a lower end surface of the main reducer (11).

## Patentansprüche

1. Baufahrzeug, umfassend ein Getriebe (5), einen Rahmen (6) und eine Antriebsachsen-Anordnung (1), wobei die Antriebsachsen-Anordnung (1) umfasst:
ein linkes Rad (141);
ein rechtes Rad (142);
eine entkoppelte Achse, die eine linke Halbachse (131) und eine rechte Halbachse (132) umfasst;
ein Verteilergetriebe (12); und
ein Hauptgetriebe (11), das über die entkoppelte Achse antriebsmäßig mit dem linken Rad (141) und dem rechten Rad (142) verbunden ist und antriebsmäßig mit dem Verteilergetriebe (12) verbunden ist, **dadurch gekennzeichnet,**
**dass** das Hauptgetriebe (11) mit einem linken Abtriebsflansch (111) und einem rechten Abtriebsflansch (112) versehen ist, wobei der linke Abtriebsflansch (111) mit einem ersten Ende der linken Halbachse (131) verbunden ist, wobei ein zweites Ende der linken Halbachse (131) mit dem linken Rad (141) verbunden ist, und wobei der rechte Abtriebsflansch (112) mit einem ersten Ende der rechten Halbachse (132) verbunden ist, wobei ein zweites Ende der rechten Halbachse (132) mit dem rechten Rad (142) verbunden ist, und
**dass** das Hauptgetriebe (11) ein erstes Gehäuse und das Verteilergetriebe (12) ein zweites Gehäuse aufweist, wobei das erste Gehäuse mit dem zweiten Gehäuse verbunden ist und wobei das erste Gehäuse fest mit dem Rahmen (6) des Baufahrzeugs verbunden ist und das Verteilergetriebe (12) mit einem Hilfsträger (125) zur Verbindung mit dem Rahmen (6) versehen ist,
**dass** das Baufahrzeug ein drei- oder vierachsiges Baufahrzeug ist und die Antriebsachsen-Anordnung (1) zwischen der Vorderachsen-Anordnung (2) und der Hinterachsen-Anordnung (3) des Baufahrzeugs angeordnet ist, und
**dass** eine vordere Endfläche des Verteilergetriebes (12) mit einem Eingangsflansch (121) versehen ist, der mit dem Getriebe (5) verbunden ist, und mit einem vorderen Abtriebsflansch (124), der antriebsmäßig mit der Vorderachsen-Anordnung (2) des Baufahrzeugs verbunden ist, und eine hintere Endfläche des Hauptgetriebes (11) mit einem hinteren Abtriebsflansch (113) versehen ist, der antriebsmäßig mit der Hinterachsen-Anordnung (3) des Baufahrzeugs verbunden ist.

2. Baufahrzeug gemäß Anspruch 1, wobei das Verteilergetriebe (12) ausgebildet ist, Kraft über eine vordere Abtriebswelle auf den vorderen Abtriebsflansch (124) zu übertragen; an dem vorderen Abtriebsflansch (124) ein Wirbelstrom-Retarder vorgesehen ist, der einen festen Abschnitt und einen drehbaren Abschnitt aufweist, der relativ zu dem festen Abschnitt drehbar vorgesehen ist; entweder der feste Abschnitt oder der drehbare Abschnitt an der vorderen Abtriebswelle des Verteilergetriebes (12) angeordnet ist, und der jeweils andere am vorderen Abtriebsflansch (124) angeordnet ist.

3. Baufahrzeug gemäß Anspruch 1, wobei das Verteilergetriebe (12) mit zumindest einem Nebenabtriebsanschluss zur Verbindung mit einer Hilfskraftvorrichtung versehen ist.

4. Baufahrzeug gemäß Anspruch 3, wobei die Hilfskraftvorrichtung eine Ölpumpe und eine Notlenkpumpe umfasst, und der zumindest eine Nebenabtriebsanschluss einen ersten Nebenabtriebsanschluss (122) zum Anschluss an die Ölpumpe und einen zweiten Nebenabtriebsanschluss (123) zum Anschluss an die Notlenkpumpe umfasst.

5. Baufahrzeug gemäß Anspruch 1, wobei sich der Eingangsflansch (121) in einer Richtung, die senkrecht zur Längsachse der entkoppelten Achse nach oben verläuft, oberhalb des vorderen Abtriebsflansches (124) und des hinteren Abtriebsflansches (113) befindet.

6. Baufahrzeug gemäß einem der Ansprüche 1 bis 5, weiter umfassend zwei Aufhängungszylinder (15) und zwei Schwenkstäbe (16), wobei die zwei Aufhängungszylinder (15) zwischen einer radseitigen Anordnung (17) des linken Rades (141) und dem Rahmen (6) und zwischen einer radseitigen Anordnung (17) des rechten Rades (142) und dem Rahmen (6) angeordnet sind, die beiden Schwenkstäbe (16) entsprechend mit dem linken Rad (141) bzw. dem rechten Rad (142) angeordnet sind, und ein Ende einer Seite jeder der Schwenkstäbe (16) über ein Kugelgelenk mit dem Rad auf der entsprechenden Seite gelenkig verbunden ist, und Enden der anderen Seite jeder der Schwenkstäbe (16) über zwei in einer vorrückwärts-Richtung angeordnete Kugelgelenke mit dem Hauptgetriebe (11) gelenkig verbunden sind.

7. Baufahrzeug gemäß Anspruch 6, wobei der Schwenkstab (16) ein V-förmiger Schwenkstab ist, dessen getrennte Enden mit einer unteren Endfläche des Hauptgetriebes (11) gelenkig verbunden sind.

## Revendications

1. Véhicule de construction comprenant une transmission (5), un châssis (6) et un ensemble d'essieu moteur (1), dans lequel l'ensemble d'essieu moteur (1) comprend :
une roue gauche (141) ;
une roue droite (142) ;
un essieu déconnecté comprenant un demi-essieu gauche (131) et un demi-essieu droit (132) ;
un carter de transfert (12) ; et
un réducteur principal (11), étant relié en entraînement à la roue gauche (141) et à la roue droite (142) par l'intermédiaire de l'essieu déconnecté, étant relié en entraînement au carter de transfert (12), **caractérisé en ce que**
le réducteur principal (11) est pourvu d'une bride de sortie vers la gauche (111) et d'une bride de sortie vers la droite (112), dans lequel la bride de sortie vers la gauche (111) est reliée à une première extrémité du demi-essieu gauche (131), une seconde extrémité du demi-essieu gauche (131) étant reliée à la roue gauche (141), et dans lequel la bride de sortie vers la droite (112) est reliée à une première extrémité du demi-essieu droit (132), une seconde extrémité du demi-essieu droit (132) étant reliée à la roue droite (142), et
**en ce que** le réducteur principal (11) a un premier boîtier et le carter de transfert (12) a un second boîtier, dans lequel le premier boîtier est relié au second boîtier, et dans lequel le premier boîtier est relié de manière fixe au châssis (6) du véhicule de construction, et le carter de transfert (12) est pourvu d'un support auxiliaire (125) pour la liaison au châssis (6),
**en ce que** le véhicule de construction est un véhicule de construction avec trois ou quatre essieux, et l'ensemble d'essieu moteur (1) est disposé entre l'ensemble d'essieu avant (2) et l'ensemble d'essieu arrière (3) du véhicule de construction, et
**en ce qu'**une surface d'extrémité avant du carter de transfert (12) est pourvue d'une bride d'entrée (121) se reliant à la transmission (5) et d'une bride de sortie avant (124) étant reliée en entraînement à l'ensemble d'essieu avant (2) du véhicule de construction, et une surface d'extrémité arrière du réducteur principal (11) est pourvue d'une bride de sortie arrière (113) étant reliée en entraînement à l'ensemble d'essieu arrière (3) du véhicule de construction.

2. Véhicule de construction selon la revendication 1, dans lequel le carter de transfert (12) est configuré pour transmettre de la puissance à la bride de sortie avant (124) par l'intermédiaire d'un arbre de sortie avant ; un retardateur à courant de Foucault est prévu sur la bride de sortie avant (124) et a une partie fixe et une partie de rotation prévue de manière rotative par rapport à la partie fixe ; l'une ou l'autre de la partie fixe et de la partie de rotation est agencée sur l'arbre de sortie avant du carter de transfert (12), et l'autre est agencée sur la bride de sortie avant (124).

3. Véhicule de construction selon la revendication 1, dans lequel le carter de transfert (12) est pourvu d'au moins un accès de prise de puissance pour la liaison à un dispositif de puissance auxiliaire.

4. Véhicule de construction selon la revendication 3, dans lequel le dispositif de puissance auxiliaire comprend une pompe à huile et une pompe de secours de direction, l'au moins un accès de prise de puissance comprend un premier accès de prise de puissance (122) pour la liaison à la pompe à huile et un second accès de prise de puissance (123) pour la liaison à la pompe de secours de direction.

5. Véhicule de construction selon la revendication 1, dans lequel la bride d'entrée (121) est située au-dessus de la bride de sortie avant (124) et de la bride de sortie arrière (113) dans une direction s'étendant vers le haut perpendiculairement à l'axe longitudinal de l'essieu déconnecté.

6. Véhicule de construction selon l'une quelconque des revendications 1 à 5, comprenant en outre deux cylindres de suspension (15) et deux tiges oscillantes (16), dans lequel les deux cylindres de suspension (15) sont agencés entre un ensemble côté roue (17) de la roue gauche (141) et le châssis (6) et entre un ensemble côté roue (17) de la roue droite (142) et le châssis (6) respectivement, les deux tiges oscillantes (16) sont agencées de manière correspondante avec la roue gauche (141) et la roue droite (142) respectivement, et une extrémité d'un côté de chacune des tiges oscillantes (16) est articulée avec la roue au niveau du côté correspondant par l'intermédiaire d'une articulation à rotule, et des extrémités de l'autre côté de chacune des tiges oscillantes (16) sont articulées avec le réducteur principal (11) par l'intermédiaire de deux articulations à rotule agencées dans une direction avant et arrière.

7. Véhicule de construction selon la revendication 6, dans lequel la tige oscillante (16) est une tige oscillante en forme de V, dont les extrémités séparées sont articulées à une surface d'extrémité inférieure du réducteur principal (11).
